# EUROPÄISCHE PATENTANMELDUNG

(11) **EP 0 570 721 A1**
(43) Veröffentlichungstag der Anmeldung: **24.11.1993**
(21) Anmeldenummer: 93106688.0
(22) Anmeldetag: 24.04.1993
(51) Int. Cl.: B65D 88/62

(54) **Behälter, insbesondere Treibstofftank**

(30) Priorität: 22.05.1992 DE 4216954
(71) Anmelder: ERNO Raumfahrttechnik Gesellschaft mit beschränkter Haftung, D-28199 Bremen (DE)
(72) Erfinder: Steenborg, Manfred, W-2863 Ritterhude 3 (DE)
(74) Vertreter: Schramm, Ewald Werner Josef

(57) **Zusammenfassung**

Ein Behälter zur getrennten Aufnahme der flüssigen oder gasförmigen Komponenten eines Mehrkomponententreibstoffs sowie eines als Austreibmediums dienenden Druckgases, der insbesondere als Tank zur Lagerung von Treibstoffen für Raumflugkörper dient, weist wenigstens zwei den Innenraum in mehrere Teilräume unterteilende Membranen (2,3) auf, die separat zugänglich sind. Der von den Membranen eingeschlossenen Teilraum (5) ist mit dem Druckgas gefüllt, während die zwischen der Behälterwand und den Membranen befindlichen Teilräume (4,6) die einzelnen Komponenten des Treibstoffs enthalten.

## Beschreibung

Die Erfindung betrifft einen Behälter zur getrennten Aufnahme eines flüssigen oder gasförmigen Mediums sowie eines Druckgases als Austreibmedium, insbesondere Tank zur Lagerung von Treibstoffen für den Betrieb von Triebwerken in Raumflugkörpern, mit wenigstens zwei den Innenraum in wenigstens drei Teilräume unterteilenden Membranen, die separat zugänglich sind.

In der Raumfahrttechnik ist es bekannt, zur Lagekorrektur bzw. -stabilisierung von Satelliten und Orbitalstationen Triebwerke einzusetzen, die durch geringe, exakt dosierbare Impulse die erforderlichen Korrekturbewegungen herbeiführen. Zum Betrieb dieser Triebwerke führen die Raumflugkörper in Treibstofftanks entsprechende, meist flüssige Treibstoffe mit sich.

Sofern zum Austreiben des Treibstoffes aus dem Tank Treibgase verwendet werden, die sich mit den Treibstoffen vermischen können, muß eine exakte Trennung zwischen dem Treibstoff und diesen Treibgasen gewährleistet werden, um sicherzustellen, daß der dem Triebwerk zugeführte Treibstoff frei von Fremdgaseinlagerungen ist.

Um die Trennung von Treibstoff und Treibgasen zu erreichen, ist es bereits bekannt, Treibstofftanks durch membranförmige Trennwände, die zumeist aus Kunststoffen bestehen, in zwei Teilräume zu unterteilen, von denen der eine Teilraum den Treibstoff enthält und der andere Teilraum mit dem Treib- oder Fördergas beaufschlagt wird, dessen Förderdruck über die Membran auf den Treibstoff einwirkt. Treibstofftanks dieser Art sind in der Raumfahrttechnik unter der Bezeichnung Bladdertanks bekannt und beispielsweise in der GM 89 15 466 beschrieben.

Neben Einkomponententreibstoffen, wie beispielsweise Hydrazin, finden in der Raumfahrttechnik in zunehmendem Maße auch Mehrkomponententreibstoffe Verwendung. Diese sind wegen ihres vergleichsweise höheren Energieinhalts insbesondere bei Langzeitmissionen vorteilhafter als Einkomponententreibstoffe.

Ein solcher Mehrkomponententreibstoff kann beispielsweise aus der Komponente Monomethylhydrazin ("MMH") als Brennstoff und Stickstofftetroxid ("NTO") als Oxydator bestehen, wobei diese beiden Komponenten in flüssiger Form vorliegen und getrennt voneinander gelagert werden müssen.

Zwar ist bereits aus der DE-OS 33 40 451 ein Behälter bekannt, in dessen Innern mehrere Kammern vorhanden sind, die mit separaten Ventilen versehen sind und die jeweils für sich als ballonartige Säcke ausgebildet sind, jedoch ist dieser Behälter nicht für eine Verwendung in Raumflugkörper geeignet. Daneben ist aus der DE-OS 40 27 306 ein Behälter gemäß dem Oberbegriff bekannt, der für die Aufnahme eines Einkomponententreibstoffs vorgesehen ist und dessen Innenraum durch eine mehrlagige Membran in zwei Teilräume unterteilt wird. Einer dieser Teilräume ist mit dem flüssigen oder gasförmigen Treibstoff, der zweite mit dem als Austriebmedium verwendeten Druckgas gefüllt, während ein zwischen den einzelnen Lagen der Membran gebildeter Zwischenraum gleichsam als Reservetank ebenfalls mit dem Einkomponententreibstoff gefüllt ist.

Aufgabe der Erfindung ist es, einen derartigen Behälter so auszubilden, daß er auf möglichst einfache Art die Verwendung eines Zweikomponententreibstoff ermöglicht, wobei beide Komponenten in flüssiger oder gasförmiger Form vorliegen.

Die Erfindung löst diese Aufgabe durch einen Behälter mit den kennzeichnenden Merkmalen des Patentanspruchs 1.

Eine besonders einfache Konstruktion ergibt sich dabei dann, wenn der erfindungsgemäße Behälter für den sogenannten Blow-down-Betrieb eingesetzt wird, bei dem der Raum zwischen den beiden Membranen vor der Inbetriebnahme einmal mit einem Austreibgas gefüllt wird und der Austreibdruck für beide Flüssigkeiten oder Gase während der Missionsdauer kontinuierlich abnimmt. In diesem Fall sind keinerlei zusätzlichen Druckregelungen erforderlich. Andererseits ist es im Rahmen der Erfindung möglich, den Austreibdruck im Zwischenraum zwischen den Membranen über einen separaten Hochdrucktank sowie einen Druckregler auf konstanten Niveau zu halten und so während der gesamten Missionsdauer einen konstanten Triebwerksschub sicherzustellen.

Bei den Ausführungsformen gemeinsam sind eine Reihe von Vorteilen, die darin bestehen, daß durch die Verwendung nur eines Tanks für einen Zweikomponententreibstoff sonst erforderliche Rohrleitungen, Halterungen usw. entfallen können, daß aber durch die Anordnung des Druckgaspolsters zwischen zwei Membranen eine sichere Trennung beider Komponenten während der Lagerung gegeben ist. Vorteile ergeben sich weiterhin aus der Möglichkeit, durch die Wahl unterschiedlicher Werkstoffe für die beiden Membranen jeweils die Kompatibilität des von einer der beiden Treibstoffkomponenten beaufschlagten Werkstoffs mit dieser Komponente zu gewährleisten.

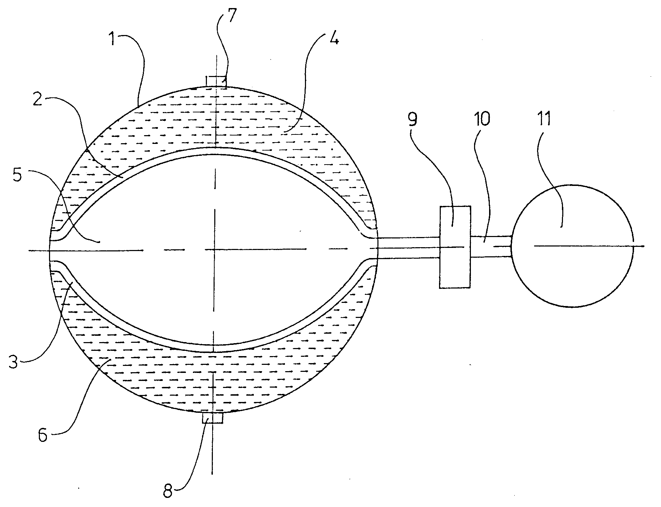

Nachfolgend soll die Erfindung anhand eines in der Zeichnung dargestellten Ausführungsbeispiels näher erläutert werden. Die Figur zeigt dabei in schematischer Weise einen Querschnitt durch einen Tankbehälter zur Aufnahme zweier flüssiger oder gasförmiger Komponenten.

Der aus Metall, in diesem Fall einer Titanlegierung, bestehende Tankbehälter 1 weist eine kugelförmige Gestalt auf. Das Innere des Behälters 1 wird durch zwei Membranen 2 und drei in insgesamt drei Teilräumen 4, 5 und 6 unterteilt. Jeder dieser Teilräume 4 bis 6 ist über ein Ventil 7, 8 und 9 zugänglich, wobei das Ventil 9 als Druckregelventil ausgebildet ist und bei dem hier beschriebenen Ausführungsbeispiel über eine Leitung 10 mit einem separaten Hochdrucktank 11 verbunden ist. Die beiden Membranen 2 und 3 bestehen jeweils aus elastischen Werkstoffen, beispielsweise aus einem Elastomerkunststoff oder aus Polytetrafluorethylen (PTFE), wobei es auch möglich ist, jeweils eine der Membranen aus Elastomerkunststoff und eine, in der Regel die dem chemisch aggressiven Brennstoff ausgesetzte, aus dem Fluorkohlenstoff zu fertigen. Es besteht hier ferner auch die Möglichkeit, metallische Membranen oder solche aus Gummi einzusetzen.

Einer der beiden äußeren Teilräume 4 und 6 ist mit einem flüssigen oder gasförmigen Brennstoff, beispielsweise Monomethylhydrazin (MMH), gefüllt, der andere mit einem flüssigen oder gasförmigen Oxidator, beispielsweise Stickstofftetroxid (NTO). Der zwischen den beiden Membranen 2 und 3 befindliche Teilraum 5 ist mit einem Forder- bzw. Austreibgas gefüllt, das in diesem Fall aus vorgespannten Heliumgas besteht.

Das Fördergas kann entweder, wie bereits erwähnt, vor Beginn einer Mission als Einmalfüllung in diesen Teilraum 5 gespeichert und dann im Blow-down-Betrieb bei kontinuierlich sinkendem Förderdruck aufgebracht werden, es kann aber auch, wie bei dem hier gezeigten Ausführungsbeispiel, aus dem außerhalb als Behälter 1 befindlichen Hochdrucktank 11 ständig ergänzt werden. Das Druckregelventil 9 sorgt dabei für die Aufrechterhaltung eines konstanten Förderdrucks und damit eine während der gesamten Mission gleichbleibenden Triebwerksschubes.

## Patentansprüche

1. Behälter zur getrennten Aufnahme eines flüssigen oder gasförmigen Mediums sowie eines Druckgases als Austreibmedium, insbesondere Tank zur Lagerung von Treibstoffen für den Betrieb von Triebwerken in Raumflugkörpern, mit wenigstens zwei den Innenraum in wenigstens drei Teilräume unterteilenden Membranen, die separat zugänglich sind, dadurch gekennzeichnet, daß der von den Membranen (2, 3) eingeschlossene Teilraum (5) mit dem Druckgas gefüllt ist, während die übrigen Teilräume (4, 6) die einzelnen Komponenten eines Mehrkomponententreibstoffs aufnehmen.

2. Behälter nach Anspruch 1, dadurch gekennzeichnet, daß der zwischen den Membranen (2, 3) befindliche Teilraum (5) mit einem Hochdrucktank (11) verbunden ist.

3. Behälter nach Anspruch 2, dadurch gekennzeichnet, daß in der Verbindungsleitung (10) zwischen dem Teilraum (5) und dem Hochdrucktank (11) ein Druckregelventil (9) vorgesehen ist.

4. Behälter nach einem der Ansprüche 1 bis 3, dadurch gekennzeichnet, daß die Membranen (2, 3) aus unterschiedlichen Werkstoffen bestehen.

5. Behälter nach einem der Ansprüche 1 bis 4, dadurch gekennzeichnet, daß wenigstens eine der Membranen (2, 3) mehrlagig aufgebaut ist.
